# EUROPÄISCHE PATENTSCHRIFT

(11) **EP 1 723 350 B1**
(45) Veröffentlichungstag und Bekanntmachung des Hinweises auf die Patenterteilung: **09.09.2009**
(21) Anmeldenummer: 05701400.3
(22) Anmeldetag: 11.02.2005
(51) Int. Cl.: F16H 7/12, F16D 41/06, F02B 67/06

(54) **ZUGMITTELTRIEB, INSBESONDERE RIEMENTRIEB**
TRACTION MECHANISM DRIVE, IN PARTICULAR A BELT DRIVE
ENTRAINEMENT A ELEMENT DE TRACTION, NOTAMMENT ENTRAINEMENT A COURROIE

(30) Priorität: 12.03.2004 DE 102004012141
(43) Veröffentlichungstag der Anmeldung: 22.11.2006
(73) Patentinhaber: Schaeffler KG, 91074 Herzogenaurach (DE)
(72) Erfinder: PAINTA, Ralph, 91469 Hagenbüchach (DE); BOGNER, Michael, 90542 Eckental (DE); GRAF, Herbert, 96120 Bischberg (DE)
(86) Internationale Anmeldenummer: PCT/EP2005/001374
(87) Internationale Veröffentlichungsnummer: WO 2005/088166

(56) Entgegenhaltungen:
- EP-A- 1 236 931
- DE-A1- 10 057 818
- DE-A1- 19 511 188
- DE-C1- 3 909 897

## Beschreibung

### Gebiet der Erfindung

Die Erfindung betrifft einen Zugmitteltrieb, insbesondere einen Riementrieb, der über mehrere Aggregate geführt ist, entsprechend dem Oberbegriff des Anspruchs 1.

### Hintergrund der Erfindung

Um in Zugmitteltrieben, insbesondere in Riementrieben, die erforderlichen Antriebsmomente auf die Nebenaggregate sicher übertragen zu können, muss eine ausreichende Vorspannkraft im Zugmittel gewährleistet werden. Gleichzeitig soll die Anzahl und Anordnung der Nebenaggregate möglichst gering bzw. kompakt gehalten werden, um unnötige Störgrößen (z.B. zusätzliche Wechselbiegungen des Zugmittels durch Umlenk- oder Spannrollen) im Trieb weitmöglichst vermeiden zu können. Kommt zu den immer größer werdenden Leistungen der Nebenaggregate noch ein ungünstiges Trieblayout, z.B. ein Zweischeibentrieb mit Wechselbiegung nach einer oder mehreren Spanneinrichtungen hinzu, so ist eine ausreichende Lebensdauer mit herkömmlichen Spanneinrichtungen nicht realisierbar. Durch die geringe Länge des Riemens und die daraus resultierende Frequenz der Biegewechselbeanspruchung wird der Riemen frühzeitig altern. Wäre es möglich, die Anzahl der Wechselbiegungen zu reduzieren und im Idealfall sogar völlig zu eliminieren, so wäre eine Erhöhung der Riemenlebensdauer problemlos möglich. Um die Anzahl der lokalen Wechselbiegungsstellen zu reduzieren, ist es möglich, den im Trieb integrierten Generator selbst als Spanneinrichtung für das Zugmittel heranzuziehen. Das heißt, dem Generator kommt insoweit eine Doppelfunktion zu, einmal seine ureigene Generatorfunktion, zum anderen die einer Spanneinrichtung. Hierüber kann ein oder können sogar mehrere Spanneinrichtungen, die ansonsten zusätzlich im Trieb zu integrieren wären und zu Wechselbiegungspunkten führen, entfallen. Leider ist aufgrund der großen Masse, die der Generator aufweist und die zum Spannen bewegt werden muss, eine Kompensation dynamischer Effekte, also dynamischer Lastwechsel am Trieb, nur bedingt bis kaum möglich. Treten also im Trieb häufig wechselnde Lastspitzen auf, ist zur Sicherstellung der Lastspitzendämpfung eine entsprechende Dämpfungsmöglichkeit, in der Regel die doch erforderliche Integration einer Spanneinrichtung, zu wählen, was aber letztendlich aus oben genannten Gründen im Endeffekt nachteilig ist.

Aus der gattungsgemäßen DE 100 57 818 A1 ist ein Zugmitteltrieb einer Brennkraftmaschine bekannt, der zwei Riemenscheiben umfasst und zum Antrieb eines Startergenerators bestimmt ist. Der Offenlegungsschrift DE 195 11 188 A1 ist eine Freilaufkupplung zu entnehmen, die innerhalb einer Riemenscheibe integriert ist. Die Vorrichtung ist dazu bestimmt in Zugmitteltrieben von Brennkraftmaschinen bei auftretender Drehungleichförmigkeit den Antrieb gezielt zu unterbrechen. Aus der EP 1 236 931 A2 ist ein Zugmitteltrieb bekannt, der als Maßnahme zum Entkoppeln von Drehungleichförmigkeiten eine Einrichtung einschließt, bei der zwei Ausgleichsrollen über ein Verbindungselement verbunden ist, wobei das Verbindungselement um eine Drehachse einer Riemenscheibe schwenkbar angeordnet ist.

### Zusammenfassung der Erfindung

Der Erfindung liegt damit das Problem zugrunde, einen Zugmitteltrieb, insbesondere einen Riementrieb anzugeben, der gegenüber bekannten Lösungen verbessert ist.

Zur Lösung dieses Problems ist bei einem Zugmitteltrieb der eingangs genannten Art erfindungsgemäß vorgesehen, dass die Zugmittelrolle zur Dämpfung von triebseitig auftretenden Lastspitzen über einen Freilauf von der Generatorwelle entkoppelbar ist.

Der erfindungsgemäß generatorseitig vorgesehene Freilauf ermöglicht es mit besonderem Vorteil, die Zugmittelrolle zur Dämpfung von Lastspitzen temporär entkoppeln zu können, so dass sich diese trotz der Trägheit des Generator-Spannsystems nicht nachteilig im Trieb auswirken. Das heißt, etwaige Drehungleichförmigkeiten der Kurbelwelle oder dergleichen, die zu dynamischen Lastspitzen führen, können durch die erfindungsgemäß vorgeschlagene Entkopplung des Generators gedämpft werden, was zu einer Beruhigung des Riementriebs führt. Die Lastspitzen werden zumindest teilweise abgebaut, die Beeinflussung des Riemens wie auch die der Lagerung der integrierten Nebenaggregate kann verringert werden.

Als Generator ist ein Startergenerator eingesetzt, der darüber hinaus eine Anlasserfunktion hat, über den also der Trieb kurzzeitig aktiv angetrieben wird, bis der zugeordnete Brennkraftmotor läuft und den Riementrieb selbst antreibt, der Startergenerator verhält sich dann als reiner Generator. In diesem Fall ist zweckmäßigerweise ein doppelter Freilauf mit einer Start-Stopp-Funktion vorzusehen, die es ermöglicht, die Zugmittelrolle mit der Generatorwelle während der Startphase, wenn also der Startergenerator als Anlasser dient, zu verriegeln, wobei diese Verriegelung im generatorischen Betrieb zwangsläufig aufgehoben sein muss und die zweite Freilauffunktion im Bedarfsfall greifen kann, nämlich dann, wenn unzulässig hohe Lastspitzen auftreten, so dass die bis dahin gekoppelte Zugmittelrolle von der Welle entkoppelt wird.

Weiterhin ist gemäß der Erfindung vorgesehen, dass der Startergenerator gegen eine Rückstellkraft schwenkbar gelagert ist. Dem Generatorgehäuse des Startergenerators ist dazu ein Befestigungsteil zugeordnet, über das der Startergenerator beispielsweise an einem Motor des Kraftfahrzeugs oder dergleichen befestigt ist.

Der Startergenerator ist zweckmäßigerweise über ein Hydraulikelement abgestützt, wobei über das Hydraulikelement die zum Spannen erforderliche Rückstellkraft erzeugt. Alternativ kann auch ein mechanisches Federelement auf Zug oder Druck wirkend verwendet werden, mit integrierter oder externer Dämpfung.

### Kurze Beschreibung der Zeichnungen

- Fig. 1: zeigt eine Prinzipdarstellung eines Zugmittel-, insbesondere Rie- mentriebs,
- Fig. 2: zeigt eine Stirnansicht des im Trieb aus Fig. 1 gezeigten Starter- Generators,
- Fig. 3: zeigt eine Ansicht des Starter-Generators aus Fig. 2 in um 90° gedrehter Stellung, teilweise im Schnitt,
- Fig. 4: zeigt ein Diagramm zur Darstellung der Wirkung des erfindungs- gemäß vorgesehenen Generatorfreilaufs in Abhängigkeit der Triebdrehzahl, und
- Fig. 5: zeigt ein Diagramm zur Darstellung der Lastspitzendämpfung über die Zeit bei Verwendung des erfindungsgemäßen Generator- freilaufs.

### Detailllierte Beschreibung der Zeichnungen

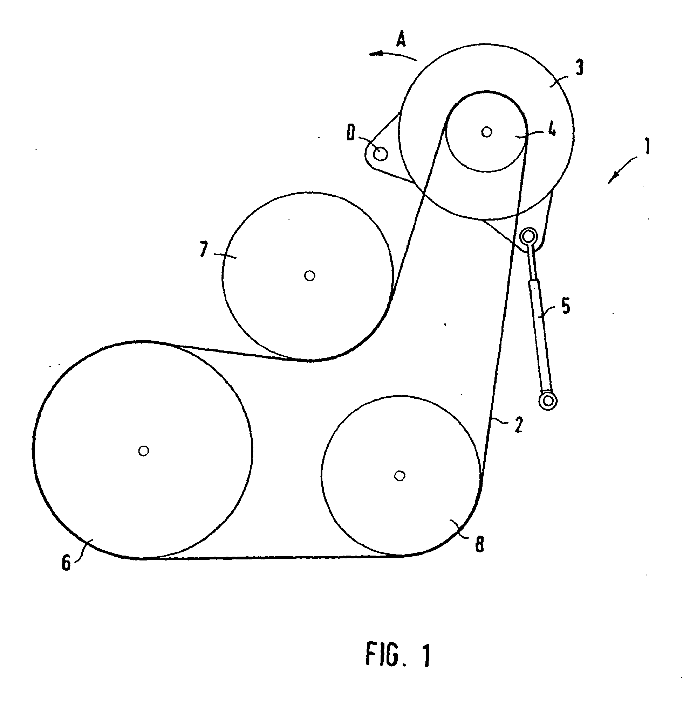

Fig. 1 zeigt einen erfindungsgemäßen Zugmitteltrieb 1, hier einen Riementrieb, mit einem Riemen 2, der über mehrere Aggregate geführt ist. Im Riementrieb integriert ist zum einen ein Generator 3, z.B. ein Startergenerator, an dem eine Riemenrolle 4 auf einer Generatorwelle angeordnet ist, über die der Riemen 2 geführt ist. Der Generator 3 ist um einen Drehpunkt D schwenkbar gelagert. An ihm greift ein nur exemplarisch gezeigtes Spannmittel 5 in Form eines Hydraulikspannelements an, das eine kontinuierliche Rückstellkraft auf den Generator ausübt, und ihn in Richtung des Pfeils A um den Drehpunkt D drängt und so die Spannung des Riemens 2 bewirkt.

Im Zugmitteltrieb 1 integriert ist ferner im gezeigten Beispiel eine Kurbelwelle 6, die über den Startergenerator 3 im Startfall aktiv angetrieben wird, das heißt der Startergenerator 3 treibt den Zugmitteltrieb 1 in diesem Fall selbst an, und die ihrerseits den Zugmitteltrieb aktiv antreibt, wenn der zugeordnete, hier nicht näher gezeigte Brennkraftmotor läuft.

Integriert ist ferner im gezeigten Beispiel eine Wasserpumpe 7 sowie ein Klimakompressor 8, die über den Riemen 2 betrieben werden, wobei natürlich jeweils entsprechende Rollen an den jeweiligen Aggregaten vorgesehen sind, über die der Riemen 2 läuft. Fig. 1 ist lediglich eine Prinzipdarstellung, die einen beliebigen Riementrieb zeigt, der aber natürlich auch völlig anders konzipiert und in den andere Aggregate integriert sein können.

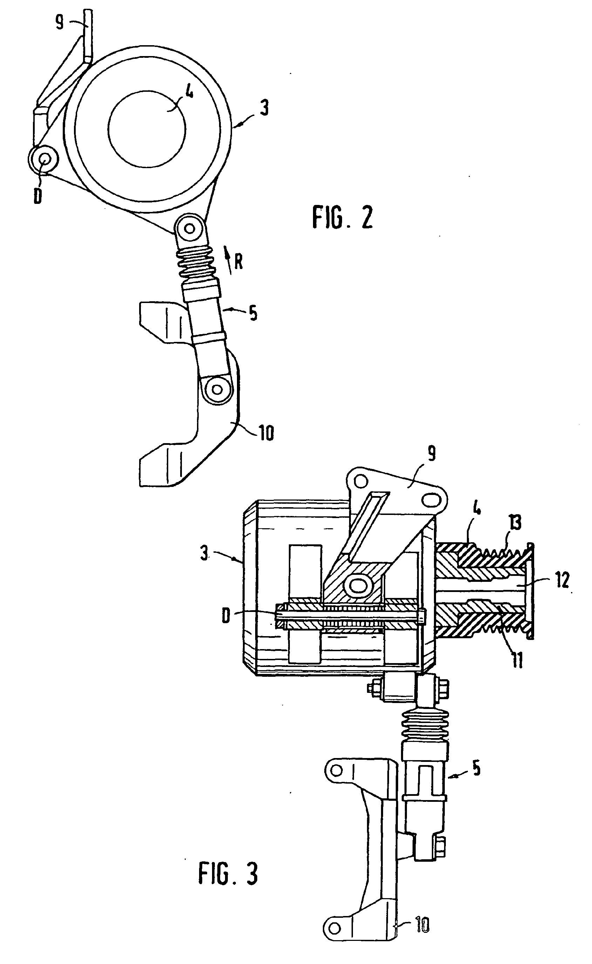

Wie beschrieben ist der Startergenerator 3 schwenkbar und gegen eine Rückstellkraft gelagert. Die Figuren 2 und 3 zeigen verschiedene Ansichten einer möglichen Ausführungsform des Startergenerators. Am Generatorgehäuse ist ein Befestigungsteil 9, ein sogenanntes Bracket, vorgesehen, über das der Generator 3 beispielsweise am Motor des Kraftfahrzeugs oder dergleichen befestigt wird. Daran vorgesehen ist eine Möglichkeit zur Schwenklagerung des Generators 3, so dass dieser um den Drehpunkt D geschwenkt werden kann.

Gezeigt ist ferner das Hydraulikelement 5, das über eine geeignete Abstützung 10 beispielsweise ebenfalls direkt am Motorblock befestigt ist oder an einem sonstigen Drittgegenstand angeordnet ist. Das Hydraulikelement 5 erzeugt eine kontinuierlich wirkende Rückstellkraft, die in Richtung des Pfeils R auf den Generator 3 wirkt und diesen spannt.

Über diese Schwenklagerung bei gleichzeitiger Spannmöglichkeit des Startergenerators 3 kann der Zugmitteltrieb 1 kontinuierlich und unabhängig vom jeweiligen Betrieb (also anlass- oder generatorischem Betrieb) gespannt werden. Aufgrund der Trägheit des Generators 3, der in der Regel zwischen 3 - 6 kg wiegt (im Vergleich zu sonst verwendeten Spanneinrichtungen, die zwischen 300 - 1.000 g wiegen und damit wesentlich agiler sind) ist es nur bedingt möglich, dynamische Lastspitzen höherer Frequenz hinreichend bedämpfen und abbauen zu können.

Zu diesem Zweck ist die Zugmittelrolle 4 über einen Freilauf 11 von der Generatorwelle 12 entkoppelbar. Das heißt, die Zugmittelrolle 4, hier also die Riemenrolle, die ein entsprechendes Keilprofil 13 zeigt, in dem ein entsprechender Keilriemen geführt ist, entkoppelt also bei einer auftretenden Lastspitze, dreht also frei bezüglich der Generatorwelle 12, so dass sich die auftretende Lastspitze nicht vollständig auf den Zugmitteltrieb auswirkt. Solche Lastspitzen können beispielsweise durch Drehungleichförmigkeiten der Kurbelwelle 6 entstehen.

Nachdem es sich bei dem Generator 3 um einen Startergenerator handelt, ist der Freilauf 11 als Doppelfunktionsfreilauf mit einer Start-Stopp-Funktion ausgeführt. Dieser Doppelfunktionsfreilauf ermöglicht es zum einen, die Zugmittelrolle 4 zwangsläufig mit der Generatorwelle 12 in der Startphase zu koppeln, wenn also eine zwingende Kopplung benötigt wird, um die beim Betriebs des Startergenerators 3 als Anlasser auf den Zugmitteltrieb aufzubringenden Momente zu übertragen, um den zugeordneten Brennkraftmotor anzuwerfen. Läuft der Brennkraftmotor, wird die temporäre Startkopplung aufgehoben, die Zugmittelrolle 4 ist nach wie vor mit der Generatorwelle 12 gekoppelt, um den Generator im generatorischen Betrieb zu treiben. Über den zweiten Freilauf wird diese Kopplung dann entkoppelt, wenn Lastspitzen auftreten, die den Kraftschluss zwischen der Zwischenrolle 4 und der Generatorwelle 12 temporär aufheben und den Freilauf auslösen.

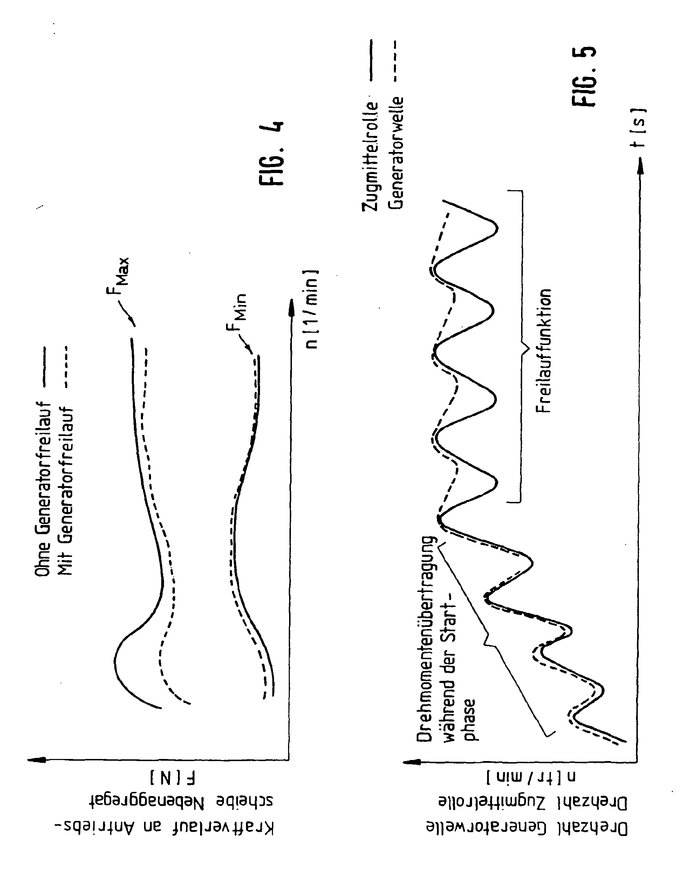

Die Wirksamkeit des Einsatzes eines Generatorfreilaufs zeigt sich anhand der Figuren 4 und 5. Fig. 4 zeigt als Prinzipdiagramm längs der Ordinate aufgetragen den Kraftverlauf an einer Antriebsscheibe eines Nebenaggregats im Zugmitteltrieb aus Fig. 1, hier beispielsweise der Wasserpumpe, die zwischen die Kurbelwelle und den Generator geschalten ist. Längs der Abszisse ist die Drehzahl des Triebs aufgetragen. Die beiden gezeigten Kurven sind die Hüllkurven der während des Betriebs maximal und minimal wirkenden Riemenkraft an der Antriebsscheibe. Ersichtlich ergibt sich eine beachtliche Schwankungsbreite, bedingt durch Unregelmäßigkeiten, wobei diese besonders im Bereich niedriger Drehzahlen ausgeprägt ist. Die durchgezogene Linie stellt den Kraftverlauf ohne Generatorfreilauf dar, die gepunktete Linie den Kraftverlauf mit Generatorfreilauf. Ersichtlich kann das ausgeprägte Maximum im Bereich niedriger Drehzahlen deutlich abgebaut werden, tendenziell nimmt die Maximalkraft ab.

Die relativ hohe an der Nebenaggregatantriebsscheibe angreifende Maximalkraft resultiert aus der Rotationsträgheit des Generators um den Drehpunkt D bzw. auch seiner Rotormasse. Wenn der Zugmitteltrieb bei laufendem Motor über die Kurbelwelle angetrieben wird, befindet sich die Wasserpumpenantriebsscheibe im Leertrum, gefolgt von dem rotationsträgen Generator. Aufgrund der Schwankungen der Kurbelwellendrehzahl wird der Riementrieb schwankungsbedingt beschleunigt und abgebremst. Bei Beschleunigung wird auch der Generator beschleunigt, was keine Auswirkung auf das Leertrum hat. Bei einer Verzögerung jedoch wird der Generator abrupt gebremst, was zu einer resultierenden Zugkraft auf die im Leertrum vor dem Generator sitzende Wasserpumpenantriebsscheibe führt. Hieraus resultiert die relativ hohe Maximalkraft.

Wird nun durch Einsatz des erfindungsgemäßen Freilaufs der Generator in diesem Fall entkoppelt, so wird die Generatorwelle nicht aktiv gebremst, ihre Drehzahl nimmt nur aufgrund ihrer Eigenreibung etc. ab, die Generatorwelle dreht gegenüber der Rolle leer, die schwankungsbedingt an der Wasserpumpenantriebsscheibe angreifende Kraft ist zwangsläufig deutlich niedriger, wie Fig. 4 zeigt.

Fig. 5 zeigt in Form eines Prinzipdiagramms längs der Ordinate aufgetragen die Drehzahl der Generatorwelle in Form der gestrichelten Linie sowie die Drehzahl der generatorseitigen Zugmittelrolle in Form der durchgezogenen Linie. Ersichtlich überlagern sich beide Linien deckungsgleich in der Startphase, wenn aufgrund der Start-Stopp-Kopplung des Startergenerators die Rolle und die Welle miteinander drehfest gekoppelt sind. Bei laufender Maschine und Antrieb des Zugmitteltriebs über die Kurbelwelle erfolgt abhängig von angreifenden Lastspitzen die temporäre Entkopplung, so dass Welle und Rolle frei gegeneinander drehen. Die Rolle folgt der starken Drehzahlschwankung der Kurbelwelle, unmittelbar übertragen über den Riemen. Dies zeigt sich in der stark gewellten durchgezogenen Linie. Die nach der Entkopplung freidrehende Generatorwelle läuft in diesem Moment ungebremst, verringert ihre Drehzahl also nur gering und wird erst wieder bei einem Anstieg der Riemendrehzahl, bedingt durch einen Anstieg der Kurbelwellendrehzahl, wieder angehoben, bedingt durch die erneute Kopplung.

### Bezugszahlen

- 1: Zugmitteltrieb
- 2: Riemen
- 3: Generator
- 4: Riemenrolle
- 5: Spannmittel
- 6: Kurbelwelle
- 7: Wasserpumpe
- 8: Klimakompressor
- 9: Befestigungsteil
- 10: Abstützung
- 11: Freilauf
- 12: Generatorwelle
- 13: Keilprofil

- A: Pfeil
- D: Drehpunkt
- R: Pfeil

## Patentansprüche

1. Zugmitteltrieb, insbesondere Riementrieb, der über mehrere Aggregate geführt ist mit einem integrierten als Startergenerator ausgeführten Generator mit einer an einer Generatorwelle angeordneten Zugmittelrolle, an der das Zugmittel geführt ist und der zum Spannen des Zugmittels gegen eine Rückstellkraft bewegbar gelagert ist, wobei der Startergenerator (3) gegen eine Rückstellkraft schwenkbar gelagert ist, wobei an einem Generatorgehäuse ein Befestigungsteil (9) vorgesehen ist, über das der Startergenerator (3) befestigt ist und **dadurch gekennzeichnet, dass** der Zugmittelrolle (4) des Startergenerators ein doppelter Freilauf (11) mit einer Start-Stopp-Funktion zugeordnet ist.

2. Zugmitteltrieb nach Anspruch 1, **dadurch gekennzeichnet, dass** der Startergenerator (3) über ein Hydraulikelement (5) bewegbar gelagert ist.

3. Zugmitteltrieb nach Anspruch 1, **dadurch gekennzeichnet, dass** der Startergenerator (3), über ein mechanisches Federelement, gegebenenfalls mit integrierter oder separater Dämpfungseinrichtung, auf Zug oder Druck gespannt ist.

## Claims

1. Traction drive, in particular belt drive, which is led via a plurality of assemblies, with an integrated generator designed as a starter alternator and having a traction-means roller which is arranged on a generator shaft and on which the traction means is guided and which is mounted movably counter to a restoring force for the purpose of tensioning the traction means, the starter alternator (3) being mounted pivotably counter to a restoring force, there being provided on a generator housing a fastening part (9), via which the starter alternator (3) is fastened, **characterized in that** the traction-means roller (4) of the starter alternator is assigned a double freewheel (11) with a start/stop function.

2. Traction drive according to Claim 1, **characterized in that** the starter alternator (3) is mounted movably via a hydraulic element (5).

3. Traction drive according to Claim 1, **characterized in that** the starter alternator (3) is tensioned under traction or compression via a mechanical spring element, if appropriate with an integrated or separate damping device.

## Revendications

1. Entraînement à élément de traction, notamment entraînement à courroie, qui est guidé sur plusieurs unités avec un générateur intégré réalisé en tant que générateur démarreur avec une poulie de moyen de traction disposée sur un arbre du générateur, sur laquelle est guidé le moyen de traction, et qui est monté de manière déplaçable à l'encontre d'une force de rappel pour serrer le moyen de traction, le générateur démarreur (3) étant monté de manière pivotante à l'encontre d'une force de rappel, une partie de fixation (9) étant prévue sur un boîtier du générateur, par le biais de laquelle le générateur démarreur (3) est fixé, **caractérisé en ce que** la poulie de moyen de traction (4) du générateur démarreur est associée à une double roue libre (11) avec une fonction marche-arrêt.

2. Entraînement à élément de traction selon la revendication 1, **caractérisé en ce que** le générateur démarreur (3) est monté de manière déplaçable par le biais d'un élément hydraulique (5).

3. Entraînement à élément de traction selon la revendication 1, **caractérisé en ce que** le générateur démarreur (3) est serré en traction ou en pression par le biais d'un élément de ressort mécanique, éventuellement avec un dispositif d'amortissement intégré ou séparé.
